# EUROPEAN PATENT SPECIFICATION

(11) **EP 1 054 502 B1**
(45) Date of publication and mention of the grant of the patent: **12.12.2007**
(21) Application number: 00109610.6
(22) Date of filing: 05.05.2000
(51) Int. Cl.: H02M 3/337, G05F 1/30

(54) **Alternating current power supply with electronically regulated voltage**
Wechselstromversorgung mit elektronisch geregelter Spannung
Alimentation électrique à courant alternatif avec tension régulée électroniquement

(30) Priority: 18.05.1999 IT BO990264
(43) Date of publication of application: 22.11.2000
(73) Proprietor: VARAT S.r.l., 41058 VIGNOLA, Province of Modena (IT)
(72) Inventor: Ratti, Giovanni, 41058 Vignola, Province of Modena (IT); Sghedoni, Arturo, 41100 Modena (IT)
(74) Representative: Porsia, Attilio

(56) References cited:
- US-A- 3 596 172
- US-A- 4 896 091
- US-A- 4 933 624
- US-A- 5 712 554
- US-A- 5 883 503

## Description

The present invention relates to an alternating current power supply with electronically regulated voltage summing up the advantages of existing electromechanical current regulators and of existing electronic voltage regulators, though not showing their limits and disadvantages.

The existing electromechanical voltage regulators, for instance for a single-phase alternated line, usually consist of a transformer placed with its secondary winding in series on the phase of the line to be regulated, said transformer being for this reason usually called series transformer, and connected with its primary winding on one end to the middle section of the coil of a variable ratio auto-transformer, said auto-transformer being shunted to the power line which needs to be regulated, downstream from said series transformer. The other end of the secondary winding of the series transformer is connected to the brush of the moving terminal of the variable ratio auto-transformer, said brush being operated by means of a servo-control with a double sense of rotation motor, driven by a process electronic unit controlling the line output voltage. When the output voltage corresponds to the given nominal value, said brush is in such a position to short-circuit the primary winding of the series transformer which is thus de-energized. If, on the contrary, the line output voltage is higher or lower than the nominal value, the servo-control moves the brush in one sense or another so as to supply the primary winding of the series transformer with a voltage which can be in phase or in counter-phase with respect to the power supply of the secondary winding of said transformer, and whose value is such to decrease or increase the circuit output voltage of such a value to bring the latter back to the desired nominal value. The electromechanical regulators of this kind are advantageous because the voltage can be regulated almost continuously, and they allow the exploitation of the electromechanical inertia of the servo-control, to avoid useless fast oscillations in the regulation circuit and they have the advantage to stand high current peaks and great phase shifts which can be due for instance to the starting of electrical motors connected to the regulated network, since in series to the line they only show the secondary winding of the series transformer, which is besides advantageous because it filters and eliminates certain network noises. On the other side, the limit of said regulators is that they have moving parts that require periodic maintenance operations and that their response times are quite long.

On the other hand, the existing electronic voltage regulators substantially consist of an auto-transformer equipped on its output with a plurality of taps, each of them supplying a voltage which is the same as, or differently increased or decreased with respect to, the nominal voltage, with a pre-established step variation, a TRIAC being provided on each socket and the output of the various TRIACs being shunted one to the other. A micro-processor electronic unit controls the input voltage of the auto-transformer and compares it with a pre-established nominal value; if the detected value is beyond given threshold levels, said unit pilots the TRIAC which supplies a voltage suitably increased or decreased with respect to the input voltage, so that the value of the output voltage is as near as possible that of the nominal voltage. This kind of regulator is advantageous since it contains no moving parts and therefore does not require the periodical maintenance operations which are necessary for electromechanical regulators, and it shows a better response to variations. On the other hand, electronic regulators do not show the aforementioned advantages belonging to electromechanical regulators and are less reliable than the latter, because the TRIACs are crossed by network operation currents and because said components are certainly less reliable than an electromechanical system.

Document US-A-3 018 431 discloses an alternating current voltage regulator with:
series transformers with their secondary windings in series to the phase of the line,
a switching system,
a process unit,
a sensing unit for the output voltage,
where the process unit switches the respective primary transformer windings with respect to the variation of the output voltage and a phase inverter.

Document US-A-5 883 503 discloses a voltage compensation system with:
a transformer with its secondary winding in series to the phase of the line,
a switching system,
a process unit,
where the process unit switches the respective primary transformer windings with respect to the variation of the phase voltage and a phase inverter.

The present invention relates to an electronic voltage regulator in accordance with the appended claim 1 and dependent claims.

Further characteristics of the present invention and the advantages resulting thereof will be more evident from the following description of a preferred form of embodiment of said invention, shown as a mere non-limiting example in the figures of the only drawing table enclosed, in which:
- Fig. 1 shows a diagram for the carrying-out and the use of one of the series transformers used in the device according to the invention;
- Fig. 2 shows the core and the coils of the transformer of figure 1 in a cross section pointing out the arrangement of said coils;
- Fig. 3 shows a basic and block diagram of the electronic regulator according to the invention.

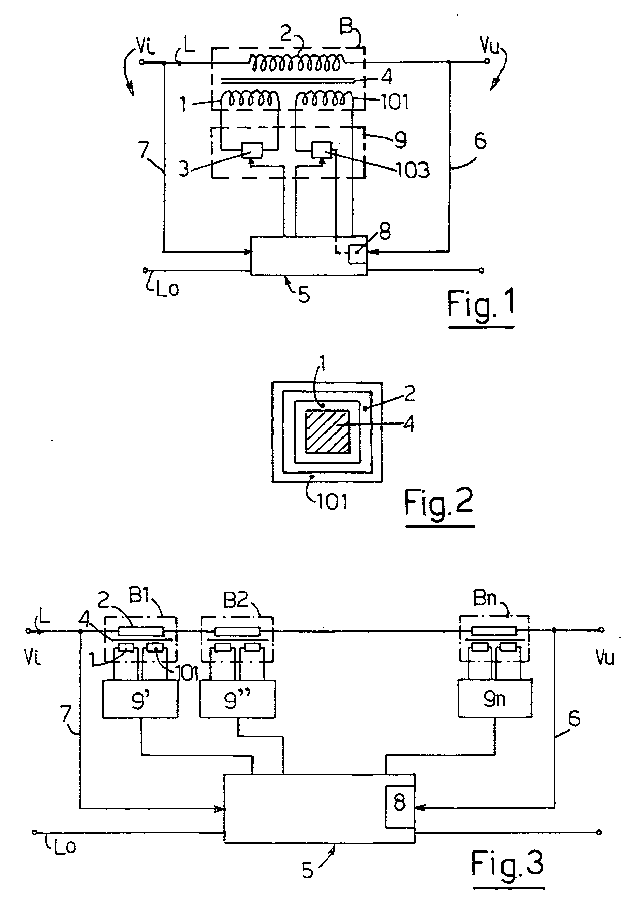

As mentioned in the introduction to the present description, the regulator according to the invention use series transformers which have to be cyclically de-energized or energized respectively by means of short-circuit or supply of their primary winding, with static electronic-controlled switches, for instance by means of a TRIACs. The use of a traditional series transformer would have made it necessary to use two TRIAC, one of which would have been destined to the short-circuiting and the other to the energizing of the primary winding of the transformer, and said TRIACs should have been switched at command, remaining in a short-circuit status for an infinitesimal time. This condition, which is nevertheless protected by the present patent application, though simplifying on the one hand the auto-turning off of the TRIACs, creates on the other hand switch overcurrents which have to be neutralized with high resistive loads, which might result in problems of space and heat dissipation. The following idea of solution has been used in order to solve this first problem. In figure 1 B indicates a series transformer, later called booster, whose secondary winding 2 is connected in series to the phase L of the line which needs to be regulated, said booster being provided with two primary windings 1 and 101 controlled by opening and closing means 3 and 103, for instance by respective TRIACs forming together a static switching system 9 (see below). One of these TRIACs, for instance 3, maintains the correspondent primary winding 1 in short-circuit or opens it, whereas the other one 103 maintains the corresponding primary winding 101 open or connects it to the power supply in the direction established by the process unit controlling the operation of the device (see below). In order to limit the value of the internal switch currents of the booster B, the secondary winding 2 is preferably located between the two primary windings 1 and 101, as shown in figure 2, where the numeral 4 indicates the magnetic core of said booster. With this solution the primary windings 1, 101 show a small coupling between them, whereas they are effectively coupled with the secondary winding. The coils 1 and 101 can have for instance the same number of turns, and the external coil 101, whose impedance is higher, is more suitable to switch voltages, whereas the internal coil 1 is shorted or opened.

The booster B thus structured is used as described below. An electronic process unit 5 detects the output voltage value Vu and further characteristics of the line L by means of the connection 6, and it can also be connected to the input, as shown by the numeral 7, in order to detect the input voltage Vi and other characteristics of said line L, such as frequency for instance. The function of the unit 5 is to check whether the output voltage Vu varies with respect to a pre-established nominal value, and to control the working of the regulator so that, if the output voltage Vu decreases or increases with respect to the nominal value, said output voltage is respectively increased or decreased of the regulation voltage relating to the dimensional characteristics of the booster. Lo indicates the neutral of the line to be regulated. The TRIAC 3 controlling the primary winding 1 of the booster is connected to the two ends of said winding and is connected with its gate to the process unit 5. The TRIAC 103, on the other hand, is connected between one end of the primary winding 101 of the booster and a phase-inverter 8 controlled by the unit 5 and located within said unit, said phase-inverter detecting the output voltage Vu in phase or phase-shifted of 180°. The other terminal of the primary winding 101 is connected to the neutral Lo. The working of the device thus structured is the following. If the output voltage Vu corresponds fully or approximately to the nominal voltage preset in unit 5, said unit keeps the TRIAC 3 closed and the TRIAC 103 open. The booster does not supply any regulation voltage and the output voltage Vu corresponds to the input voltage Vi. If, on the other hand, the unit 5 finds out that the output voltage Vu is lower or higher than the preset nominal voltage, said unit 5 opens the TRIAC 3 and closes the TRIAC 103, thus obtaining that the unit 8 supplies the primary winding 101 with the output voltage Vu respectively in phase or in counter-phase, so that the booster provides a regulation voltage Vr which can be added to or subtracted from the output voltage Vu, which is thus suitably increased or decreased.

Fig. 3 shows the embodiment diagram of a voltage regulator according to the invention, comprising one or more boosters indicated with B1, B2 and Bn, said boosters being connected to corresponding switching systems 9, 9'', 9n equipped with the TRIACs, for instance as described in figure 1, each system being controlled by the process unit 5 which, as already said referring to figure 1, is connected to the line L output and possibly also to the line input. The number of boosters forming the regulator is limited by the degree of precision one might want to obtain for the regulation of the output voltage with respect to the input voltage value and which has to be regulated.

A variation of the output voltage Vu with respect to the nominal value preset in unit 5 allows said unit first of all to recognize whether it has to supply the booster/s with a voltage in phase or in counter-phase with respect to the output voltage, in order to increase or decrease said output voltage, and at the same time said unit 5 defines which booster/s have to be activated or deactivated in progression and with the maximum speed, so as to simulate a step regulation, substantially continuous and wholly similar to that of an electromechanical regulator, though faster in its response. The continuity of the insertion for the voltage regulation can be obtained by following the rule of binary numeration. Let's analyze for instance the case of four boosters indicated in the following table with a), b), c) and d). The numerals 0 and 1 respectively indicate a de-energized booster and an energized booster. Each booster can add or subtract a voltage value which is half the previous value going from the booster with the highest value to the one with the lowest value.

| **A** | **b** | **c** | **d** | **values** | **total** |
|---|---|---|---|---|---|
| 0 | 0 | 0 | 1 | 1 | 1 |
| 0 | 0 | 1 | 0 | 2 | 2 |
| 0 | 0 | 1 | 1 | 2+1 | 3 |
| 0 | 1 | 0 | 0 | 4 | 4 |
| 0 | 1 | 1 | 0 | 4+1 | 5 |
| 0 | 1 | 0 | 1 | 4+2 | 6 |
| 0 | 1 | 1 | 1 | 4+2+1 | 7 |
| 1 | 0 | 0 | 0 | 8 | 9 |
| 1 | 0 | 0 | 1 | 8+1 | 9 |
| 1 | 0 | 1 | 0 | 8+2 | 10 |
| 1 | 0 | 1 | 1 | 8+2+1 | 11 |
| 1 | 1 | 0 | 0 | 8+4 | 12 |
| 1 | 1 | 0 | 1 | 8+4+1 | 13 |
| 1 | 1 | 1 | 0 | 8+4+2 | 14 |
| 1 | 1 | 1 | 1 | 8+4+2+1 | 15 |

The boosters are connected or disconnected rapidly one after the other following the previous table, whether the voltage to be added is positive or negative. When it is negative, the inverter changes the algebraic sign of all the values. Preferably no jump is made because this condition, even though on the one hand this would be advantageous as far as regulation speed is concerned, which is not always necessary, on the other hand it would endanger the continuity and the regularity of the correction.

After the output voltage has been brought back within the limits of the pre-established value, it remains there and there are no switchings till a variation in the input voltage or a voltage variation due to loads applied to the network L-Lo force it to get out of said range. The unit 5 will be provided with a suitable inertia so as to prevent temporary and useless switchings, so that the output voltage Vu will be able to vary freely for a reasonable value within a given range.

It is understood that the description does not contain the details concerning the carrying out of the process unit 5 with the phase-inverter 8 and of the switching units 9, since they can be deduced by experts. It is also understood that the description relates to a preferred form of embodiment of the invention, which can undergo several changes and variations, especially of constructional nature, which can for instance relate to the use of switching means other than TRIACs, for instance SCRs or IGBTs or other changes technicians can easily deduce.

## Claims

1. Alternating current power supply with electronically regulated voltage, of the type consisting of two or more series transformers or so-called boosters (B1, B2, Bn), connected with their secondary winding (2) in series on the phase (L) of the line to be regulated, each of them supplying a regulation voltage with a given value, each primary winding of the booster being controlled by its own switching system (9', 9", 9n) using for instance a TRIAC or other suitable electronic devices, for instance SCRs or IGBTs, by means of which each booster can be energized in order to provide the regulation voltage (Vr) for which it is sized, said switching systems being connected to an electronic process unit (5) controlling the output voltage (Vu) of the line (L), which preferably also detects the input characteristics of said line and which is pre-arranged so as to check whether the output voltage varies with respect to a preset nominal value, and to verify if the voltage is below or above said value, said unit being equipped with a phase-inverter (8) so that, if the line output voltage remains equal to the preset nominal value, the boosters are de-energized, whereas, if the output voltage varies above or below with respect to the nominal value, said process unit commands the phase-inverter to supply a voltage in phase or in counter-phase with respect to the output voltage, respectively in case an increase or a decrease regulation of the voltage is required, and said process unit energizes or deenergizes the necessary boosters in order to bring back and keep the output voltage (Vu) as near as possible to the nominal value,
**characterized by** the fact that
- the boosters in use can provide different regulation voltages, increasing and preferably multiples of a pre-established minimum value defining the value of one regulation step;
- the process unit (5) is provided with such means that, in case of intervention, it automatically searches for a most suitable correction value, passing at the maximum speed through all the pre-established regulation values, which are stored in the process unit, linked to the different characteristics of the boosters in use, thus simulating a step regulation;
- each booster (B) consists of a secondary winding (2), connected in series on the line to be regulated, and two primary windings (1, 101), galvanically isolated from said secondary winding and one with respect to the other, said primary windings being controlled by corresponding electronic rapid switches (3, 103), by means of which a primary winding (1) can be short-circuited whereas the other primary winding (101) remains open, so as to keep the booster de-energized or by means of which the primary winding (1), which before was shorted, can be opened and the other primary winding (101) can be supplied so that the booster can provide the secondary winding with the regulation voltage for which it was sized.

2. Power supply according to claim 1, in which the secondary winding (2) of each booster is placed between the two primary windings (1, 101).

3. Power supply according to claim 1, in which, supposing the number of turns in the primary windings (1, 101) of the booster is the same, the external circuit having a greater impedance is used to provide the regulation voltage (Vr), whereas the internal one is shorted or opened.

4. Power supply according to one of the preceding claims, in which the process unit (5) controlling the different boosters is provided with means which prevent its intervention if the variations in the output voltage (Vu) do not last beyond a given time and/or if they are within given maximum and minimum threshold values, so as to avoid continuous and useless regulations.

## Patentansprüche

1. Spannungsversorgungsgerät für Wechselstrom mit elektronisch geregelter Spannung, die derart ausgeführt ist, dass sie zwei oder mehr Reihentransformatoren oder sogenannte Booster (B1, B2, Bn) umfasst, die mit ihrer Sekundärwicklung in Reihe an die Phase (L) der Leitung angeschlossen sind, die zu regeln ist, wobei jede von diesen eine Regelungsspannung mit einem vorgegebenen Wert zuführt, wobei jede Primärwicklung der Booster durch ein eigenes Schaltsystem (9', 9", 9n) gesteuert wird, beispielsweise unter Verwendung eines Triac oder anderer geeigneter elektronischer Einheiten, wie beispielsweise SRCs oder IGBTs, mittels denen jeder Booster erregt werden kann, um die Regelungs-Spannung (Vr), für die er ausgelegt ist, zuzuführen, wobei das Schaltsystem mit einer elektronischen Prozesseinheit (5) verbunden ist, welche die Ausgangsspannung (Vu) der Leitung (L) überwacht, welche vorzugsweise auch die Eingangscharakteristik der Leitung (L) erfasst, und welche voreingerichtet ist, um zu prüfen, ob die Ausgangsspannung bezüglich eines voreingestellten Sollwerts abweicht und um zu verifizieren, wenn die Spannung oberhalb oder unterhalb dieses Wertes ist, wobei diese Einheit mit einem Phaseninverter (8) ausgestattet ist, so dass, wenn die Ausgangsspannung der Leitung gleich dem vorgegebenen Sollwert bleibt, die Booster entregt werden, wohingegen wenn die Ausgangsspannung nach oben oder unten bezüglich des vorgegebenen Sollwerts abweicht, die Prozesseinheit den Phaseninverter anweist, eine zur Ausgangsspannung gleichphasige oder gegenphasige Spannung zuzuführen, je nachdem, ob eine Zunahme- oder Abnahme-Regelung der Spannung benötigt wird, und wobei die Prozesseinheit die notwendigen Booster erregt oder entregt, um die Ausgangsspannung (Vu) so nah wie möglich an den Sollwert zurückzubringen und zu halten,
**dadurch gekennzeichnet,**
- **dass** die in Gebrauch befindlichen Booster unterschiedliche Regelungsspannungen liefern können, die zunehmen und die vorzugsweise ein Vielfaches eines vorher festgesetzten Minimalwerts betragen, wodurch der Wert eines Regelungsschrittes definiert wird,
- **dass** die Prozesseinheit (5) mit solchen Mitteln ausgestattet ist, dass sie, im Falle eines Eingriffs, automatisch nach einem bestgeeigneten Korrekturwert sucht, wobei sie in Maximalgeschwindigkeit alle vorher festgesetzten Regelungswerte durchläuft, die in der Prozesseinheit gespeichert sind und die mit den verschiedenen Charakteristika der in Gebrauch befindlichen Boostern verknüpft sind, und **dadurch** einen Regelungsschritt simulieren,
- **dass** jeder Booster (B) eine Sekundärwicklung (2), die in Reihe an die zu regelnde Leitung angeschlossen sind, und zwei Primärwicklungen (1, 101) umfasst, die von der Sekundärwicklung und voneinander galvanisch getrennt sind, wobei die Primärwicklungen durch entsprechende elektronische Schnellschalter (3, 103) gesteuert werden, mittels derer eine Primärwicklung (1) kurzgeschlossen werden kann, während die andere Primärwicklung (101) offen verbleibt, um den Booster entregt zu lassen, oder mittels derer die Primärwicklung (1), die vorher kurzgeschlossen war, geöffnet werden kann und die andere Primärwicklung (101) versorgt werden kann, so dass der Booster die Sekundärwicklung mit der Regelungsspannung versorgen kann, für die er ausgelegt war.

2. Spannungsversorgungsgerät nach Anspruch 1, bei welcher die Sekundärwicklung (2) von jedem Booster zwischen den beiden Primärwicklungen (1, 101) angeordnet ist.

3. Spannungsversorgungsgerät nach Anspruch 1, bei welcher, angenommen die Anzahl der Windungen der Primärwicklungen (1, 101) des Boosters ist gleich, der externe Stromkreis, der eine größere Impedanz aufweist, zur Lieferung der Regelungsspannung (Vr) verwendet wird, während der interne Stromkreis kurzgeschlossen oder geöffnet ist.

4. Spannungsversorgungsgerät nach einem der vorhergehenden Ansprüche, bei welchem die Prozesseinheit (5), welch die verschiedenen Booster steuert, mit Mitteln ausgestattet ist, die ihren Eingriff verhindert, wenn die Abweichungen der Ausgangsspannung (Vu) nicht länger als eine vorgegebene Zeit andauern und/oder wenn sie innerhalb von vorgegebenen Minimal- und Maximal-Grenzwerten liegen, um fortlaufende und unnütze Regelungen zu vermeiden.

## Revendications

1. Alimentation électrique à courant alternatif à régulation électronique de tension, du type consistant en deux ou plusieurs transformateurs de série dits survolteurs (B1, B2, Bn), connectés avec leur enroulement secondaire (2) en série sur la phase (L) du réseau ou de la ligne à réguler, chaque survolteur fournissant une tension de régulation d'une valeur donnée, chaque enroulement primaire du survolteur étant régulé par son propre système de commutation (9', 9", 9n) en utilisant par exemple un TRIAC ou d'autres dispositifs électroniques appropriés, par exemple des SCR ou des IGBT, au moyen desquels chaque survolteur peut être activé afin de fournir la tension de régulation (Vr) pour laquelle il est conçu, lesdits systèmes de commutation étant connectés à une unité de traitement électronique (5) commandant la tension de sortie (Vu) du réseau (L), qui détecte de préférence également les caractéristiques d'entrée dudit réseau et qui est pré-configurée pour vérifier si la tension de sortie varie par rapport à une valeur nominale prédéfinie et si cette tension est inférieure ou supérieure à ladite valeur, ladite unité étant équipée d'un inverseur de phase (8) de telle sorte que, si la tension de sortie du réseau demeure égale à la valeur nominale prédéfinie, les survolteurs sont désactivés, tandis que, si la tension en sortie varie au-dessus ou en dessous de la valeur nominale, ladite unité de traitement commande l'inverseur de phase pour délivrer une tension en phase ou en contre-phase par rapport à la tension de sortie, respectivement, dans le cas où une régulation à la hausse ou à la baisse de cette tension est nécessaire, et ladite unité de traitement active ou désactive les survolteurs nécessaires pour ramener et conserver la tension de sortie (Vu) au plus près possible de la valeur nominale,
**caractérisée en ce que**
- les survolteurs utilisés peuvent fournir différentes tensions de régulation à la hausse et, de préférence, des multiples d'une valeur minimale pré-établie définissant la valeur d'un incrément de régulation;
- l'unité de traitement (5) comporte des moyens de telle sorte qu'en cas d'intervention, elle recherche automatiquement une valeur de correction la plus appropriée, en passant à la vitesse maximale à travers toutes les valeurs de régulation pré-établies, qui sont stockées dans l'unité de traitement, liées aux différentes caractéristiques des survolteurs utilisés, en simulant ainsi une régulation incrémentielle ;
- chaque survolteur (B) consiste en un enroulement secondaire (2), connecté en série sur le réseau à réguler, et deux enroulements primaires (1, 101), isolés galvaniquement dudit enroulement secondaire et l'un par rapport à l'autre, lesdits enroulements primaires étant commandés par des commutateurs électroniques rapides correspondants (3, 103), au moyen desquels un enroulement primaire (1) peut être mis en court-circuit, tandis que l'autre enroulement primaire (101) reste ouvert de façon à maintenir le survolteur désactivé, ou au moyen desquels l'enroulement primaire (1), qui était auparavant mis en court-circuit, peut être ouvert et l'autre enroulement primaire (101) peut être alimenté de telle sorte que le survolteur peut fournir à l'enroulement secondaire la tension de régulation pour laquelle il a été conçu ou dimensionné.

2. Alimentation électrique selon la revendication 1, dans laquelle l'enroulement secondaire (2) de chaque survolteur est placé entre les deux enroulements primaires (1, 101).

3. Alimentation électrique selon la revendication 1, dans laquelle, en supposant que le nombre de spires des enroulements primaires (1, 101) du survolteur est le même, le circuit externe ayant une plus grande impédance est utilisé pour fournir la tension de régulation (Vr), tandis que le circuit interne est mis en court-circuit ou ouvert.

4. Alimentation électrique selon l'une quelconque des revendications précédentes, dans laquelle l'unité de traitement (5) commandant les différents survolteurs comporte des moyens qui empêchent son intervention si les variations de la tension de sortie (Vu) ne durent pas au-delà d'un temps donné et/ou si elles se trouvent dans des tensions de seuil maximales minimales, de façon à éviter des régulations continues et inutiles.
